# EUROPÄISCHE PATENTSCHRIFT

(11) **EP 1 501 898 B1**
(45) Veröffentlichungstag und Bekanntmachung des Hinweises auf die Patenterteilung: **01.02.2006**
(21) Anmeldenummer: 03722516.6
(22) Anmeldetag: 22.04.2003
(51) Int. Cl.: C09B 62/515, C09B 62/415, C09B 62/255

(54) **WASSERLÖSLICHE FASERREAKTIVE FARBSTOFFE, VERFAHREN ZU IHRER HERSTELLUNG UND IHRE VERWENDUNG**
WATER-SOLUBLE FIBER-REACTIVE DYES, METHOD FOR THE PRODUCTION AND USE THEREOF
COLORANTS HYDROSOLUBLES REAGISSANT AVEC LES FIBRES, PROCEDE DE PRODUCTION DE CES COLORANTS ET LEUR UTILISATION

(30) Priorität: 27.04.2002 DE 10218962
(43) Veröffentlichungstag der Anmeldung: 02.02.2005
(73) Patentinhaber: DyStar Textilfarben GmbH & Co. Deutschland KG, 65926 Frankfurt am Main (DE)
(72) Erfinder: SCHWAIGER, Günther, 65929 Frankfurt am Main (DE); RUSS, Werner, 65439 Flörsheim (DE); MEIER, Stefan, 60529 Frankfurt am Main (DE)
(86) Internationale Anmeldenummer: PCT/EP2003/004122
(87) Internationale Veröffentlichungsnummer: WO 2003/093371

(56) Entgegenhaltungen:
- EP-A- 0 281 898
- EP-A- 0 345 577
- EP-A- 0 497 174
- DE-A- 4 039 866
- DE-A- 4 332 255

## Beschreibung

Die Erfindung liegt auf dem technischen Gebiet der faserreaktiven Azofarbstoffe.

Kupferkomplexe faserreaktiver Monoazoverbindungen enthaltend eine oder mehrere faserreaktive Gruppe sind beispielsweise aus EP-A-526792, DE-A-4332255, DE-A-2049664, EP 0040806, EP-A-069376, DE-A-3941620, DE-A-4039866, EP-A-281898, EP-A- 0345577, EP-A-395951 oder EP 497174 bekannt. Diese besitzen jedoch gewisse anwendungstechnische Mängel, wie beispielsweise eine zu große Abhängigkeit der Farbausbeute von wechselnden Färbeparametern im Färbeprozess, oder einen ungenügenden oder unegalen Farbaufbau auf Baumwolle, wobei sich ein guter Farbaufbau aus der Fähigkeit eines Farbstoffes ergibt, bei Anwendung erhöhter Farbstoffkonzentrationen im Färbebad die entsprechend farbstärkere Färbung zu liefern. Des weiteren zeigen diese Farbstoffe nur unbefriedigende Fixierausbeuten d. h. derjenigen Anteil an Farbstoff der auf der zu färbenden Ware dauerhaft fixiert ist, ist zu gering, insbesondere bei niedrigen Temperaturen, sowie unbefriedigende Wasch- und Lichtechtheiten.

Es ist jedoch aus ökologischen und ökonomischen Gründen wichtig Farbstoffe bereitzustellen, die besonders hohe Fixierausbeuten haben, um den Anteil an nicht fixiertem Farbstoff im Färbereiabwasser möglichst gering zu halten. Auch sollten Farbstoffe möglichst unabhängig von wechselnden Färbeparametern, wie z.B. Färbetemperatur im Färbeprozess, stets gleichmäßig farbstarke Färbungen liefern. Ferner werden heutzutage größere Anforderungen an die Waschechtheit und Lichtechtheit gestellt.

Mit der vorliegenden Erfindung wurde nunmehr gefunden, dass Farbstoffe der allgemeinen Formel (1) überraschenderweise deutlich bessere Waschechtheiten und Lichtechtheiten bei sehr gutem Aufbauvermögen liefern. Diese Farbstoffe haben zudem höhere Fixierausbeuten und eine deutlich geringere Parameterabhängigkeit beim Färben. Sie lassen sich daher auch besser mit anderen Farbstoffen, die bei deutlich niedrigeren Temperaturen fixieren, kombinieren.

Die Erfindung betrifft somit Farbstoffe der allgemeinen Formel (1): 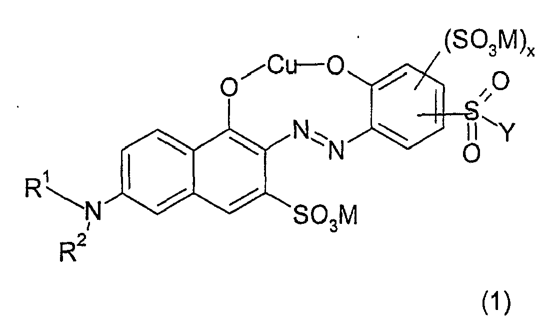
worin
- M: für Wasserstoff, Alkali, Ammonium oder für das Äquivalent eines Erdalkali Ions steht,
- x: 0 oder 1 bedeutet,
- Y: für -CH=CH₂, -CH₂CH₂Z¹ steht, worin
Z¹ Hydroxy oder eine unter Alkaliwirkung abspaltbare Gruppe ist und
- R¹: für Wasserstoff, oder C₁-C₄-Alkyl steht;
- R²: für eine Gruppierung der allgemeinen Formeln (2), (3) oder (4) steht.

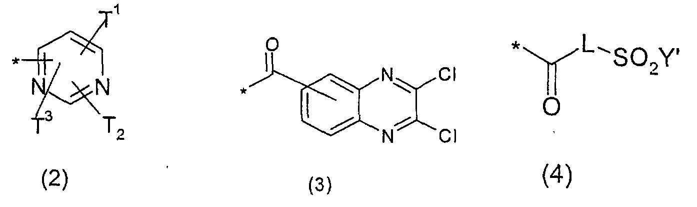

worin
- Y': für -CH=CH₂, -CH₂CH₂Z¹ steht, worin
- Z¹: Hydroxy oder eine unter Alkaliwirkung abspaltbare Gruppe ist und
- T¹: Wasserstoff, Methyl, Fluor, Chlor oder Brom ist,
- T²: Wasserstoff, Fluor, Chlor oder Brom ist wobei für T² und T¹ nicht gleichzeitig Wasserstoff sind;
- T³: Wasserstoff, Methyl, Fluor, Chlor oder Brom ist,
- L: ist Phenylen oder Naphthylen, welches mit bis zu zwei Substituenten aus der Reihe Chloro, Bromo, Hydroxy, C₁ bis C₄-Alkyl insbesondere Methyl, Ethyl, Sulfo, Cyano substituiert sein kann, oder aber ist ein C₂ bis C₆ Alkylen , welches mit 1 bis 2 Heterogruppem, wie beispielsweise Oxo, Thio, Amino, C₁₋C₄-Alkylamino unterbrochen sein kann.

L ist bevorzugt Phenylen, Ethylen, Propylen und 3-Oxopentylen.

Für Substituenten R¹ stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl.

Für R² stehende Reste der allgemeinen Formel (2) sind beispielsweise bevorzugt: 2,4-Difluor-pyrimidin-6-yl, 4,6-Difluor-pyrimidin-2-yl, 5-Chlor-2,4-difluorpyrimidin-6-yl, 5-Chlor-4,6-difluor-pyrimidin-2-yl, 4,5-Difluor-pyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl, 4-Chlor-pyrimidin-6-yl, 2-Fluor-4-methyl-pyrimidin-6-yl.

Besonders bevorzugt steht R² für 2,4-Difluor-pyrimidin-6-yl, 5-Chlor-2,4-difluorpyrimidin-6-yl.

Sowohl in den obigen allgemeinen Formeln als auch in den nachfolgend angegebenen allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Farbstoffe der allgemeinen Formel (1) können innerhalb der Bedeutung von Y bzw. Y' unterschiedliche faserreaktive Gruppen -SO₂Y bzw. -SO₂Y' besitzen.

Alkalisch eliminierbare Substituenten Z¹, die in β-Stellung der Ethylgruppe von Y bzw. Y' stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino.
Insbesondere können die faserreaktiven Gruppen -SO₂Y bzw - SO₂Y' zum einen Vinylsulfonylgruppen und zum anderen Gruppen -CH₂CH₂Z¹, bevorzugt β-Chlorethyl und insbesondere β-Sulfato-ethylsulfonyl-Gruppen, bedeuten.

Die Gruppen "Sulfo", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M, Carboxygruppen Gruppen entsprechend der allgemeinen Formel -COOM , Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt.

Die erfindungsgemäßen Farbstoffe der allgemeinen Formel (1) kann man zum Beispiel durch gängige Diazotierung der aromatischen Amine der allgemeinen Formel (8) 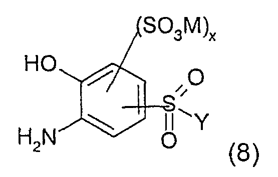
worin M, Y und x wie oben definiert sind,
und Kupplung auf eine Kupplungskomponente der allgemeinen Formel (9) 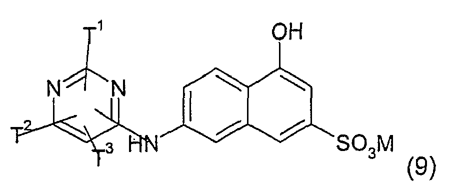
worin T¹, T², T³ und M die oben angegebene Bedeutung haben, aufbauen und anschließend, in dem Fachmann geläufiger Weise durch Kupferung die erfindungsgemäßen Farbstoffe der Formel (1) herstellen.

Diazotierbare Amine mit komplexierenden Resten der allgemeinen Formel (8) sind beispielsweise 3-Amino-4-hydroxyphenyl-β-hydroxyethylsulfon, 3-Amino-4-hydroxyphenyl-β-sulfatoethylsulfon, 3-Amino-4-hydroxyphenylvinylsulfon, 4-Amino-5-hydroxyphenyl-β-hydroxyethylsulfon, 4-Amino-5-hydroxyphenyl-β-sulfatoethylsulfon, 4-Amino-5-hydroxyphenyl-vinylsulfon, 3-Amino-4-hydroxy-5-sulfophenyl-β-sulfatoethylsulfon, 3-Amino-4-hydroxy-5-sulfophenyl-vinylsulfon.

Die Kupplungskomponenten der allgemeinen Formel (9) sind zugänglich durch gängige Kondensation von Verbindungen der allgemeinen Formel (10) 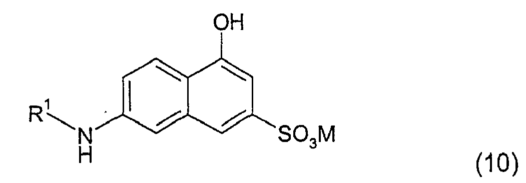
wobei R¹ und M die oben angegebene Bedeutung haben,
mit Verbindungen der allgemeinen Formeln (11), (12) oder (13) 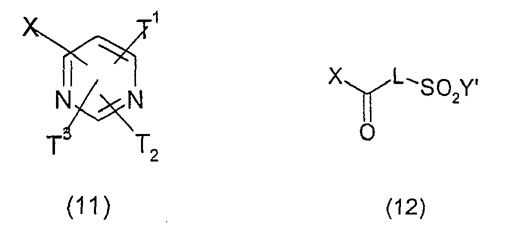 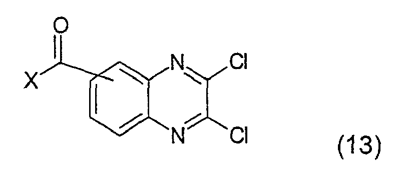
wobei T¹, T², T³, L und Y' die obengenannte Bedeutung haben und X für Fluor, Chlor oder Brom steht. Falls R² eine Gruppe der allgemeinen Formel (2) entspricht, können in Abhängigkeit der Bedeutung der Substituenten zwei Isomere auftreten, die nebeneinander im Farbstoff vorliegen

Verbindungen der allgemeinen Formel (10) sind beispielsweise 2-Amino-5-hydroxynaphthalin-7-sulfonsäure, 2-N-Methyl-amino-5-hydroxy-naphthalin-7-sulfonsäure.

Verbindungen der allgemeinen Formel (11) sind beispielsweise 2,4,6-Trifluorpyrimidin; 4,5,6-Trifluorpyrimidin; 2,4,5,6-Tetrafluorpyrimidin; 4,6-Difluorpyrimidin; 2,4,5,6-Tetrachlorpyrimidin; 2,4,6-Trichlorpyrimidin; 2,4,6-Tribromopyrimidin; 2,4,6-Trifluor-5-chloropyrimidin; 5-Methyl-2,4,6-trichloropyrimidin, 4,6-Difluor-5-chlor-pyrimidin

Verbindungen der allgemeinen Formel (12) sind beispielsweise 3-Chlorethylsulfonylbenzoylchlorid, 2-Chlorethylsulfonyl-propionylchlorid

Verbindungen der allgemeinen Formel (13) sind 2,3-Dichloro-chinoxalin-5-carbonylchlorid und 2,3-Dichloro-chinoxalin-6-carbonylchlorid.

Alternativ kann zunächst die Diazotierung der Verbindungen der allgemeinen Formel (8) und Kupplung auf Verbindungen der Formel (10) durchgeführt werden und gefolgt von einer anschließenden Kupferung, woran sich die Kondensation mit einer Verbindung der allgemeinen Formel (11), (12) oder (13) anschließt, oder es erfolgt zunächst die gängige Diazotierung der aromatischen Amine der allgemeinen Formel (8) 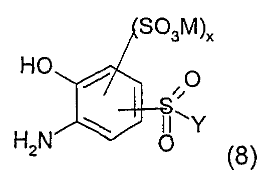
worin M, Y und x wie oben definiert sind, und Kupplung auf eine Kupplungskomponente der allgemeinen Formel 10, gefolgt von der Kondensation mit einer Verbindung der allgemeinen Formel (11), (12) oder (13), woran sich die dem Fachmann geläufigen Kupferung mit Kupfersulfat-Pentahydrat anschließt.

Die Abscheidung und Isolierung der erfindungsgemäßen Verbindungen der allgemeinen Formel (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällüng als Calciumsulfat und Abtrennung mittels Filtration zu entfernen.

Die erfindungsgemäßen Farbstoffe können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können zusätzlich die in Handelsfarbstoffen üblichen Hilfsmittel enthalten, wie Puffersubstanzen, die einen pH-Wert in wässriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffe als Farbstoffpulver mit einem Gehalt von 10 bis 80 Gew -% bezogen auf das Farbstoffpulver bzw die Präparation, an einem Elektrolytsalz, das auch als Stellmittel bezeichnet wird, vor. Diese Farbstoffpulver können zudem die erwähnten Puffersubstanzen in einer Gesamtmenge von bis zu 10 Gew.-%, bezogen auf das Farbstoffpulver enthalten. Sofern die erfindungsgemäßen Farbstoffe in wässriger Lösung vorliegen, beträgt der Gesamtfarbstoffgehalt in diesen wässrigen Lösungen bis zu etwa 50 Gew.-%, wie beispielsweise zwischen 5 und 50 Gew.-%., wobei der Elektrolytsalzgehalt in diesen wässrigen Lösungen bevorzugt unterhalb 10 Gew.-%, bezogen auf die wässrige Lösung, beträgt; die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffe besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen der erfindungsgemäßen Farbstoffe, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffe zum Färben oder Bedrucken dieser Materialien bzw. Verfahren zum Färben oder Bedrucken solcher Materialien in an und für sich üblichen Verfahrensweisen, bei welchen man erfindungsgemäße Farbstoffe als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffe lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Waschechtheiten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gegebenenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der erfindungsgemäßen Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die Cellulosefärbungen zeigen nach der üblichen Nachbehandlung durch Spülen zur Entfernung von nicht fixierten Farbstoffanteilen sehr gute Farbstoffeigenschaften und liefern nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke olivefarbige Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad und guten Aufbau auf den Cellulosematerialien aus. Besonders vorteilhaft ist die gute Waschechtheit der Färbungen der hohe Fixierwert sowie die geringe Temperaturabhängigkeit gegenüber dem Stand der Technik.

Des weiteren können die erfindungsgemäßen Farbstoffe auch für das faserreaktive Färben von Wolle Verwendung finden. Auch lässt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So werden beispielsweise die erfindungsgemäßen Farbstoffe bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 angehoben, um besonders zur Erzielung von hohen Farbtiefen die volle reaktive Bindung zwischen den erfindungsgemäßen Farbstoffen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffe sehr gut ist, lassen sie sich auch mit Vorteil bei üblichen kontinuierlichen Färbeverfahren einsetzen. Die erfindungsgemäßen Farbstoffe liefern auf den genannten Materialien rubinrote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Die in den Beispielen formelmäßig beschriebenen Verbindungen sind teilweise in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Lithium-, Natrium- oder Kaliumsalze, in die Synthese eingesetzt werden.

### Beispiel 1

377 Teile 2-Aminophenol-4-sulfatoethylsulfon-6-sulfosäure werden mit Natriumnitrit diazotiert und bei pH 6-7 auf 353 Teile des Kondensationsproduktes aus 2-Amino-5-hydroxy-naphthalin-7-sulfonsäure und 2,4,6-Trifluorpyrimidin gekuppelt und anschließend mit 245 Teilen Kupfersulfat-Pentahydrat umgesetzt. Der erhaltene rote Farbstoff, welcher der Formel A (eines der Isomeren als freie Säure angegeben) 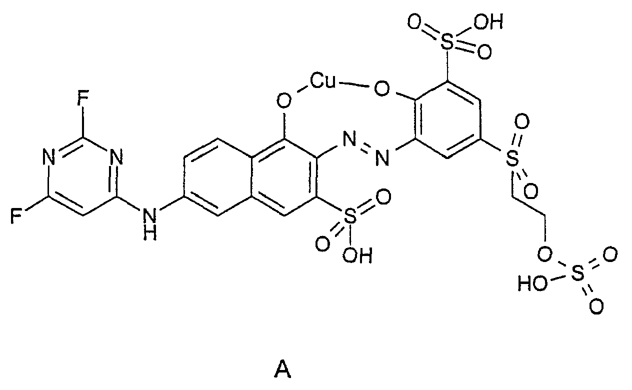 entspricht, wird mit Natriumchlorid ausgesalzen, abfiltriert und im Vakuum bei 50°C getrocknet. Er ergibt auf Baumwolle rubinrote Färbungen und Drucke mit sehr guten Echtheiten, insbesondere einer sehr guten Lichtechtheit.

### Beispiel 2

377 Teile 2-Aminophenol-4-sulfatoethylsulfon-6-sulfosäure werden mit Natriumnitrit diazotiert und auf 239 Teile 2-Amino-5-hydroxy-naphthalin-7-sulfonsäure gekuppelt und anschließend mit 250 Teile Kupfersulfat-Pentahydrat umgesetzt. Der erhaltene rote Farbstoff, welcher der Formel B 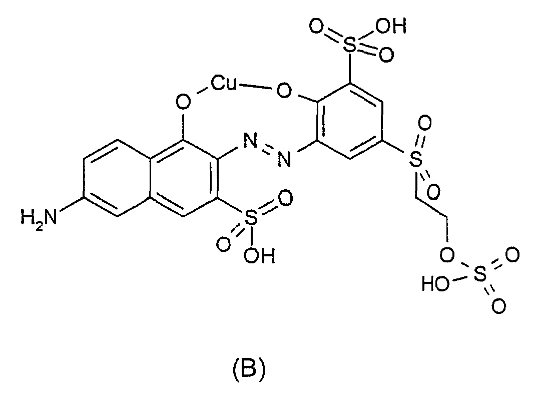 entspricht, wird ggf. mit Natriumchlorid ausgesalzen, abfiltriert und im Vakuum bei 50°C getrocknet. Er ergibt auf Baumwolle rubinrote Färbungen und Drucke, die gute Echtheiten aufweisen und beständig sind gegen oxidative Einflüsse.

Durch Umsetzung von Farbstoff B mit 2,4,6-Trifluorpyrimidin erhält man den Farbstoff der Formel (A).

### Beispiel 3

Verfährt man wie in den Beispielen1 oder 2 beschrieben und setzt man als Kupplungskomponente 2-N-Methyl-amino-5-hydroxy-naphthalin-7-sulfonsäure so erhält man Farbstoff C 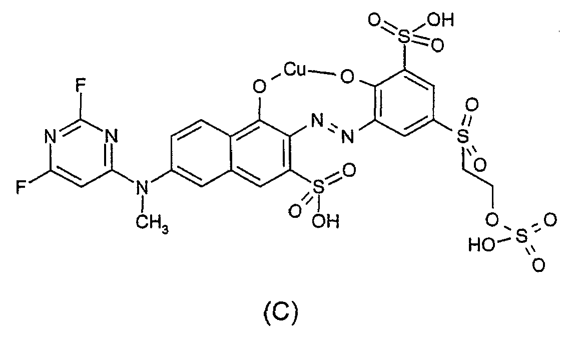 mit ausgezeichnete Echtheiten.

In der folgenden Tabelle sind weitere erfindungsgemäße Farbstoffe beschrieben, welche in Anlehnung an die obigen Beispiele hergestellt werden können, wobei X für Fluor, Chlor oder Brom steht.

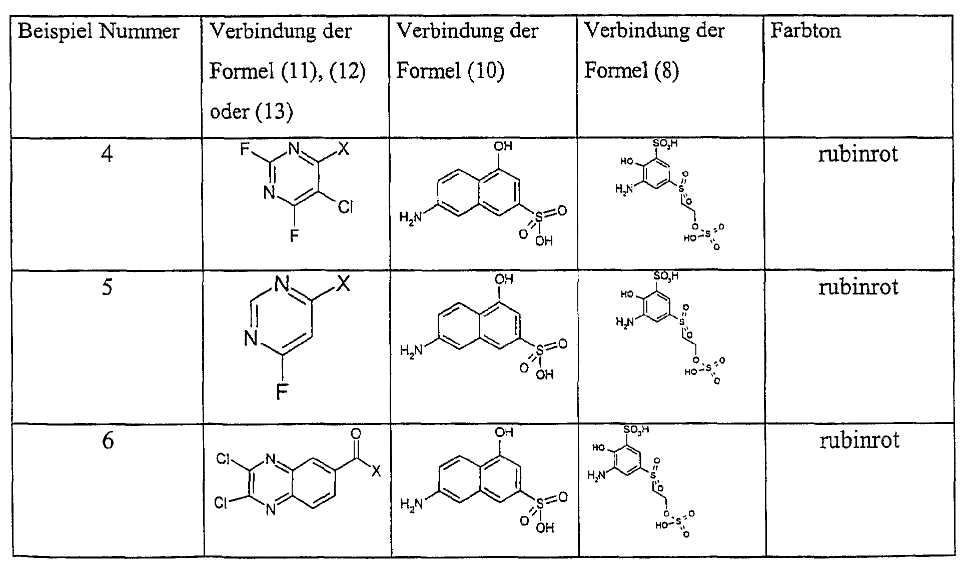

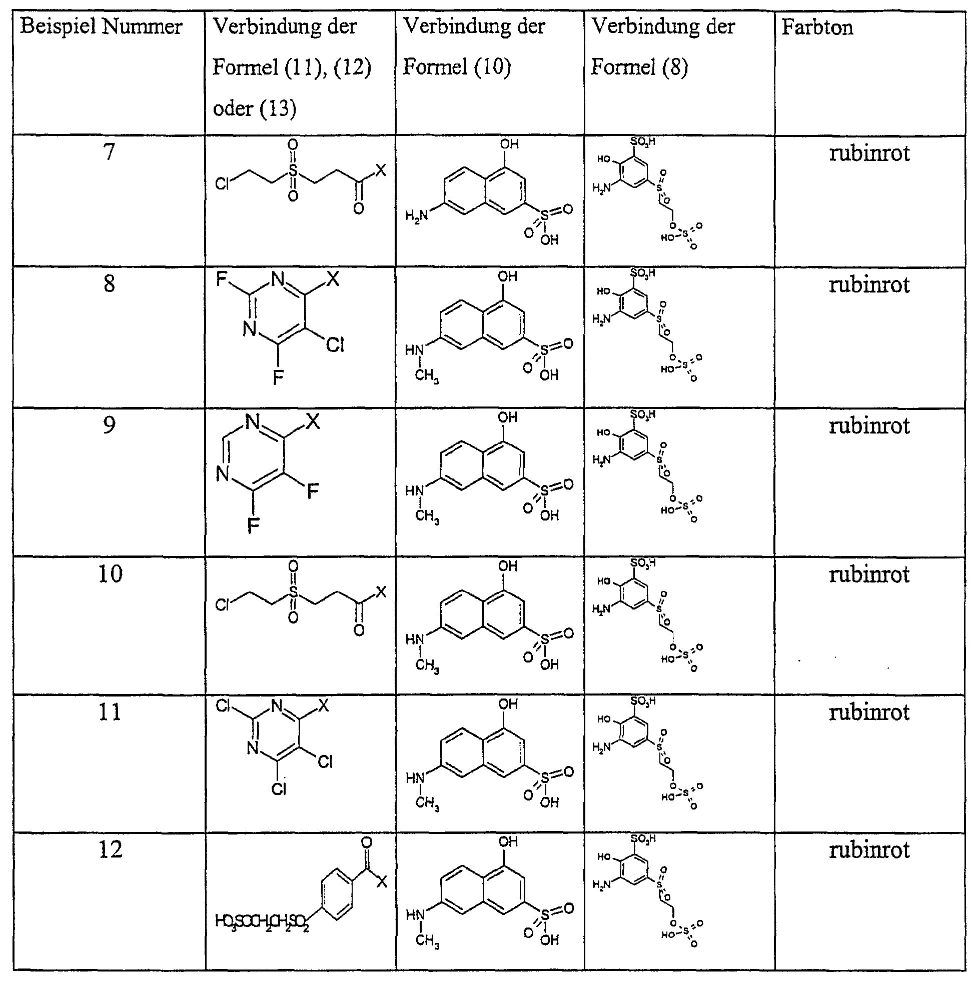

### Färbebeispiel :

4 Teile des Farbstoffes aus Beispiel 2 werden in 200 Teilen Wasser gelöst. Man gibt 20 Teile Kochsalz,5 Teile Natronlauge und 20 Teile Baumwollgewebe hinzu, und erwärmt in einem Färbeapparat in 20 min. auf 60°C. Bei dieser Temperatur wird 45 min gefärbt. Das Baumwollgewebe wird anschließend mit Wasser und verdünnter Essigsäure gespült und getrocknet. Man erhält eine rubinrote Färbung mit sehr guten Echtheiten

## Patentansprüche

1. Farbstoffe der allgemeinen Formel (1): 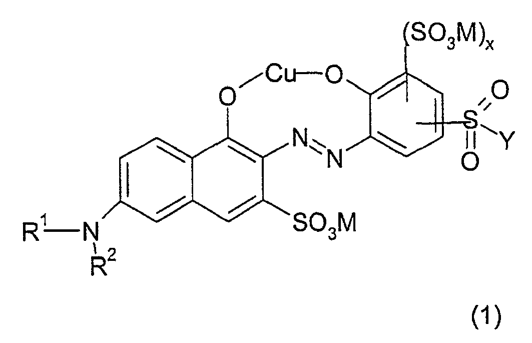 worin
M für Wasserstoff, Alkali, Ammonium oder für das Äquivalent eines Erdalkali Ions steht,
x 0 oder 1 bedeuten,
Y für -CH=CH₂, -CH₂CH₂Z¹ steht,
worin
Z¹ Hydroxy oder eine unter Alkaliwirkung abspaltbare Gruppe ist und
R¹ für Wasserstoff, oder C₁-C₄-Alkyl steht;
R² für eine Gruppierung der allgemeinen Formeln (2), (3) oder (4) steht. 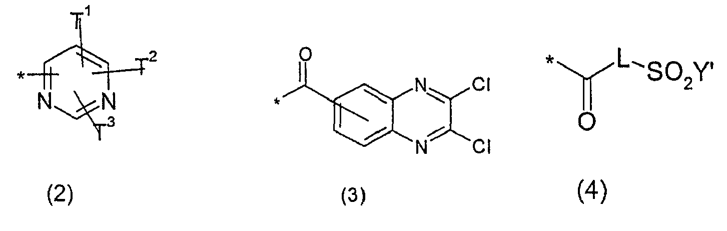
worin
T¹ Wasserstoff, Methyl, Fluor, Chlor oder Brom ist,
T² Wasserstoff, Fluor oder Chlor ist wobei für T² und T¹ nicht gleichzeitig Wasserstoff sind;
T³ Wasserstoff, Methyl, Fluor, Chlor oder Brom ist,
Y' für -CH=CH₂, -CH₂CH₂Z¹ steht,
worin
Z¹ Hydroxy oder eine unter Alkaliwirkung abspaltbare Gruppe ist und
L ist Phenylen oder Naphthylen, welches mit bis zu zwei Substituenten aus der Reihe Chloro, Bromo, Hydroxy, C₁ bis C₄-Alkyl insbesondere Methyl, Ethyl, Sulfo, Cyano substituiert sein kann, oder aber ein C₂ bis C₆ Alkylen ist, welches mit 1 bis 2 Heterogruppen, wie beispielsweise Oxo, Thio, Amino, C₁₋C₄-Alkylamino unterbrochen sein kann.

2. Farbstoffe nach Anspruch 1 worin R² einer Gruppierung der allgemeinen Formel (2) entspricht, 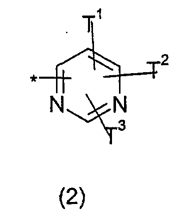 worin T¹, T² und T³ die in Anspruch 1 angegebene Bedeutung haben.

3. Farbstoffe nach mindestens einem der Ansprüche 1 oder 2, worin x für 1 und die SO₂Y-Grupp in meta-Stellung zur Azogruppe steht.

4. Farbstoffe nach mindestens einem der Ansprüche 1 bis 3, worin R² für einen Difluorpyrimidinyl-Rest steht.

5. Verfahren zur Herstellung von Verbindungen nach Anspruch1 durch gängige Diazotierung der aromatischen Amine der allgemeinen Formel (8) 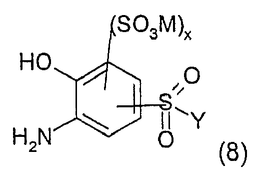
worin M, Z, Y und x die in Anspruch 1 angegebene Bedeutung haben, und Kupplung auf eine Kupplungskomponente der allgemeinen Formel (9) 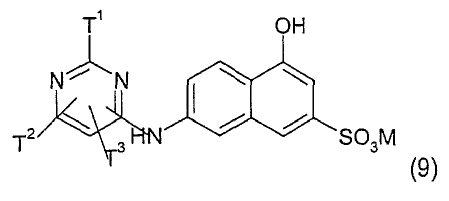
worin T¹, T² , T³ und M die in Anspruch 1 angegebene Bedeutung haben, gefolgt von einer anschließenden Kupferung mit Kupfersulfat-Pentahydrat.

6. Verfahren zur Herstellung von Verbindungen nach Anspruch1 durch gängige Diazotierung der aromatischen Amine der allgemeinen Formel (8) 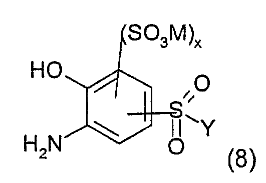
worin M, Z, Y und x die in Anspruch 1 angegebene Bedeutung haben und Kupplung auf eine Kupplungskomponente der allgemeinen Formel (10) 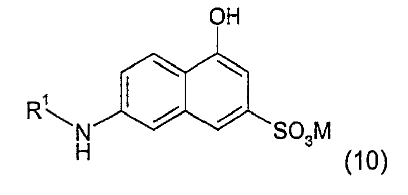
worin R¹ und M die in Anspruch 1 angegebene Bedeutung haben, gefolgt von einer anschließenden Kupferung mit Kupfersulfat-Pentahydrat und einer Kondensation mit einem Reaktivanker der allgemeinen Formel (11), (12) oder (13) 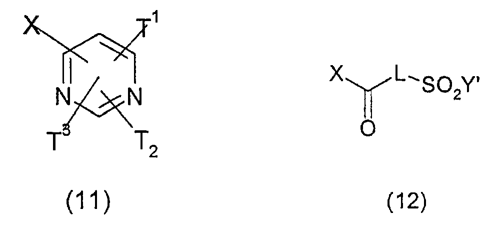 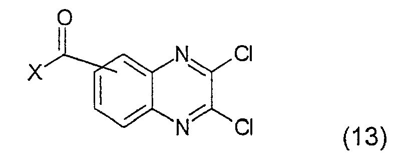
worin T¹, T², T³, L, und Y' die in Anspruch 1 angegebenen Bedeutungen haben und X für Fluor, Chlor oder Brom steht.

7. Verfahren zur Herstellung von Verbindungen nach Anspruch1 durch gängige Diazotierung der aromatischen Amine der allgemeinen Formel (8) 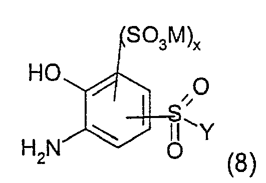
worin M, Z , Y und x die in Anspruch 1 angegebene Bedeutung haben gefolgt von einer Kupplung auf eine Kupplungskomponente der allgemeinen Formel (10) 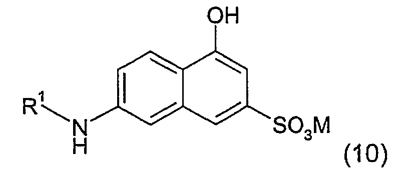
worin R¹ und M die in Anspruch 1 angegebene Bedeutung haben, sowie einer Kondensation mit einem Reaktivanker der allgemeinen Formel (11), (12) oder (13) 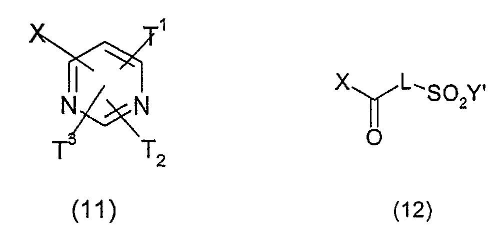 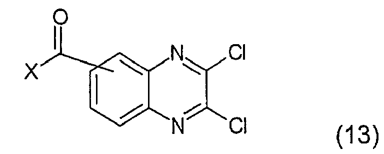
worin T¹, T², T³, L, und Y' die in Anspruch 1 angegebenen Bedeutungen haben und X für Fluor, Chlor oder Brom steht und einer anschließenden Kupferung mit Kupfersulfat-Pentahydrat

8. Verwendung der Farbstoffe nach mindestens einem der Ansprüche 1 bis 5 zum Färben oder Bedrucken von hydroxy- und/oder carbonamidgruppenhaltigem Material, vorzugsweise Fasermaterial.

9. Verfahren zum Färben oder Bedrucken von hydroxy- und/oder carbonamidgruppenhaltigem Material, vorzugsweise Fasermaterial, bei welchem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, **dadurch gekennzeichnet, dass** man als Farbstoffe mindestens einem der Ansprüche 1 bis 5 einsetzt.

10. Färbepräparation enthaltend einen Farbstoff gemäß mindestens einem der Ansprüche 1 bis 5.

## Claims

1. Dyes of the general formula (1): 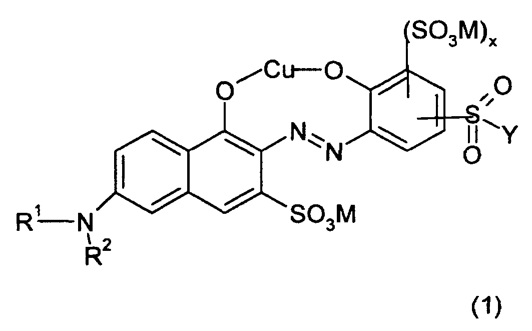 where
M is hydrogen, alkali, ammonium or the equivalent of an alkaline earth metal ion,
x is 0 or 1,
Y is -CH=CH₂ or -CH₂CH₂Z¹,
where
Z¹ is hydroxyl or an alkali-detachable group, and
R¹ is hydrogen or C₁-C₄-alkyl;
R² is a moiety of the general formulae (2), (3) or (4) 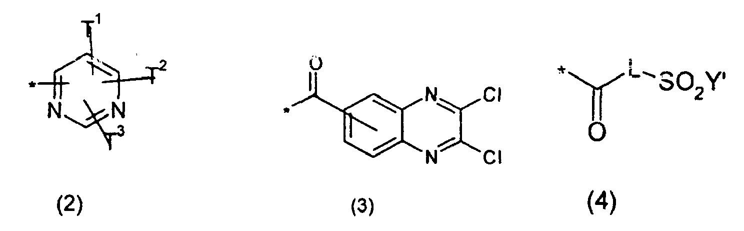
where
T¹ is hydrogen, methyl, fluorine, chlorine or bromine,
T² is hydrogen, fluorine or chlorine with the proviso that T² and T¹ are not both hydrogen;
T³ is hydrogen, methyl, fluorine, chlorine or bromine,
Y' is -CH=CH₂ or -CH₂CH₂Z¹,
where
Z¹ is hydroxyl or an alkali-detachable group, and
L is phenylene or naphthylene, which may be substituted by up to two substituents selected from the group consisting of chloro, bromo, hydroxyl, C₁ to C₄-alkyl especially methyl, ethyl, sulpho, cyano, or else is a C₂ to C₆ alkylene which may be interrupted by 1 to 2 hetero groups, such as for example oxo, thio, amino, C₁-C₄-alkylamino.

2. Dyes according to Claim 1, wherein R² is a moiety of the general formula (2) 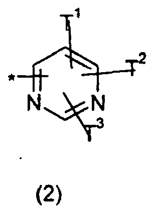 where T¹, T² and T³ are each as defined in Claim 1.

3. Dyes according to at least one of Claims 1 or 2, wherein x is 1 and the SO₂Y group is meta to the azo group.

4. Dyes according to at least one of Claims 1 to 3, wherein R² is difluoropyrimidinyl.

5. Process for preparing compounds according to Claim 1 by conventional diazotization of the aromatic amines of the general formula (8) 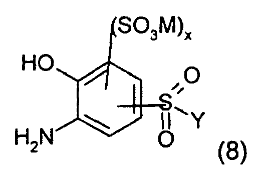
where M, Z, Y and x are each as defined in Claim 1, and coupling onto a coupling component of the general formula (9) 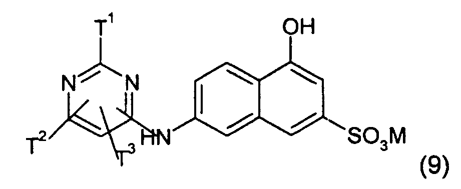
where T¹, T² , T³ and M are each as defined in Claim 1, followed by a subsequent coppering with copper sulphate pentahydrate.

6. Process for preparing compounds according to Claim 1 by conventional diazotization of the aromatic amines of the general formula (8) 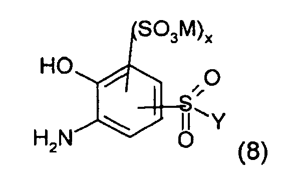
where M, Z, Y and x are each as defined in Claim 1, and coupling onto a coupling component of the general fomlula (10) 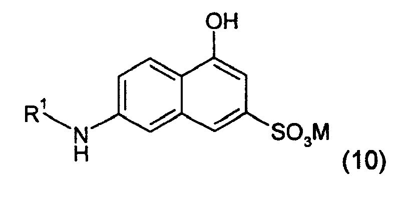
where R¹ and M are each as defined in Claim 1, followed by subsequent coppering with copper sulphate pentahydrate and a condensation with a fibre-reactive group of the general formula (11), (12) or (13) 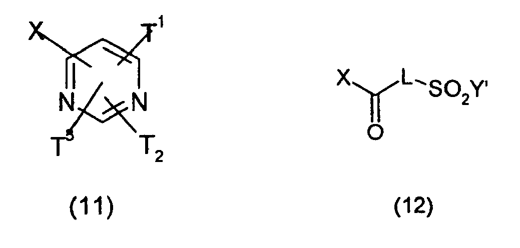 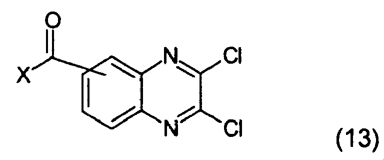
where T¹, T², T³, L and Y' are each as defined in Claim 1 and X is fluorine, chlorine or bromine.

7. Process for preparing compounds according to Claim 1 by conventional diazotization of the aromatic amines of the general formula (8) 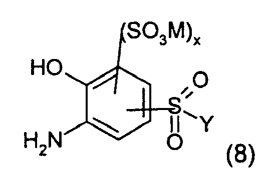
where M, Z, Y and x are each as defined in Claim 1, followed by coupling onto a coupling component of the general formula (10) 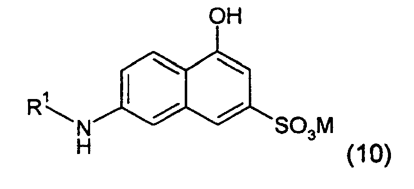
where R¹ and M are each as defined in Claim 1, and a condensation with a fibre-reactive group of the general formula (11), (12) or (13) 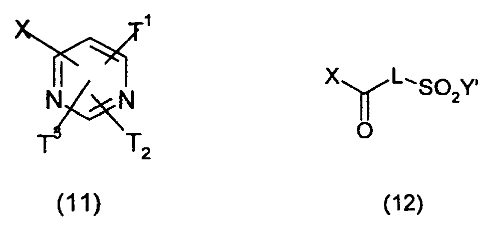 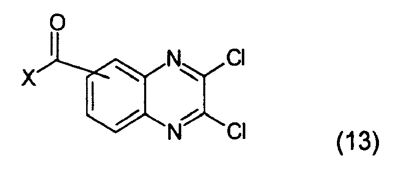
where T¹, T², T³, L and Y' are each as defined in Claim 1 and X is fluorine, chlorine or bromine and subsequent coppering with copper sulphate pentahydrate.

8. Use of the dyes claimed in at least one of Claims 1 to 5 for dyeing or printing hydroxyl- and/or carboxamido-containing material, preferably fibre material.

9. Process for dyeing or printing hydroxyl- and/or carboxamido-containing material, preferably fibre material, by applying one or more dyes in dissolved form to the material and fixing the dye or dyes on the material by means of heat or with the aid of an alkaline agent or by means of both measures, which comprises using dyes comprising at least one of Claims 1 to 5.

10. Dye preparation comprising a dye according to at least one of Claims 1 to 5.

## Revendications

1. Colorants de formule générale (1) : 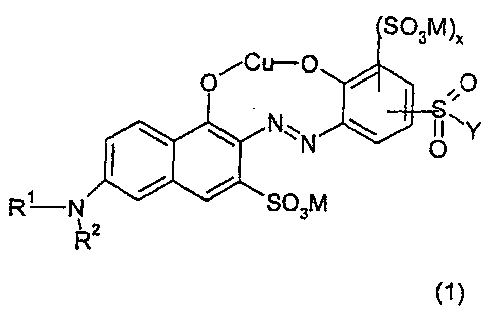 dans laquelle
M représente un hydrogène, un métal alcalin, un ammonium ou l'équivalent d'un ion alcalinoterreux ;
x vaut 0 ou 1 ;
Y représente -CH=CH₂, -CH₂CH₂Z¹,
dans lesquels
Z¹ représente un hydroxy ou un groupe éliminable par l'action d'un alcali ; et
R¹ représente un hydrogène ou un alkyle en C₁-C₄ ;
R² représente un groupement de formules générales (2), (3) ou (4) 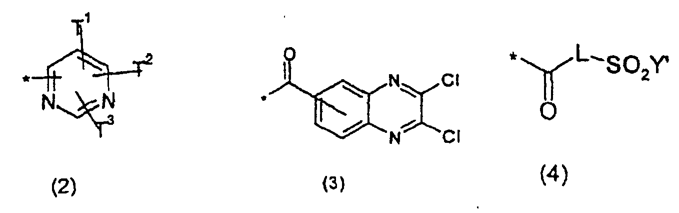
dans lesquelles
T¹ représente un hydrogène, un méthyle, un fluore, un chlore ou un brome ;
T² représente un hydrogène, un fluoré ou un chlore et où T² et T¹ ne représentent pas simultanément un hydrogène ;
T³ représente un hydrogène, un méthyle, un fluore, un chlore ou un brome ;
Y' représente -CH=CH₂, -CH₂CH₂Z¹,
dans lesquels
Z¹ représente un hydroxy ou un groupe éliminable par l'action d'un alcali ; et
L représente un phénylène ou un naphtylène, qui peut être substitué par jusqu'à deux substituants parmi le groupe constitué d'un chloro, d'un bromo, d'un hydroxy, d'un alkyle en C₁ à C₄, en particulier d'un méthyle, d'un éthyle, d'un sulfo, d'un cyano, ou représente toutefois un alkylène en C₂ à C₆, qui peut être interrompu par de 1 à 2 groupes hétéro, tels que, par exemple, un oxo, un thio, un amino, un C₁-C₄-alkylamino.

2. Colorants selon la revendication 1, dans lesquels R² correspond à un groupement de formule générale (2), 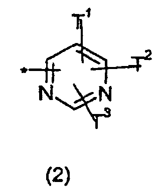
dans laquelle T¹, T² et T³ présentent la signification indiquée dans la revendication 1.

3. Colorants selon au moins l'une des revendications 1 ou 2, dans lesquels x vaut 1 et le groupe SO₂Y se situe en position méta par rapport au groupe azo.

4. Colorants selon au moins l'une des revendications 1 à 3, dans lesquels R² représente un radical difluoropyrimidinyle.

5. Procédé de préparation de composés selon la revendication 1 par diazotation habituelle des amines aromatiques de formule générale (8) 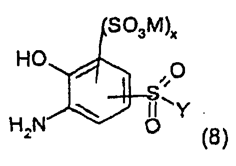
dans laquelle M, Z, Y et x présentent la signification indiquée dans la revendication 1, et par couplage sur un composant de couplage de formule générale (9) 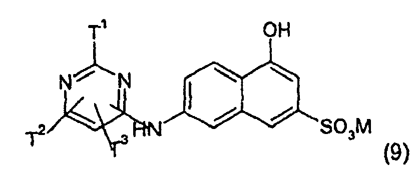
dans laquelle T¹, T², T³ et M présentent la signification indiquée dans la revendication 1, suivi d'un cuivrage subséquent avec du pentahydrate de sulfate de cuivre.

6. Procédé de préparation de composés selon la revendication 1, par diazotation habituelle des amines aromatiques de formule générale (8) 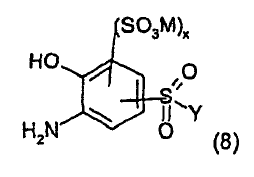
dans laquelle M, Z, Y et x présentent la signification indiquée dans la revendication 1, et par couplage sur un composant de couplage de formule générale (10) 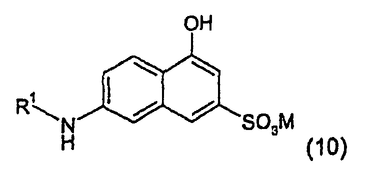
dans laquelle R¹ et M présentent la signification indiquée dans la revendication 1, suivi d'un cuivrage subséquent avec du pentahydrate de sulfate de cuivre et d'une condensation avec une ancre réactive de formules générales (11), (12) ou (13) 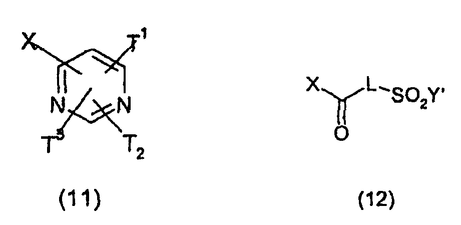 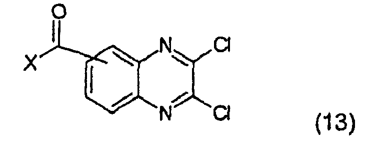
dans lesquelles T¹, T², T³, L et Y' présentent les significations indiquées dans la revendication 1 et X représente un fluore, un chlore ou un brome.

7. Procédé de préparation de composés selon la revendication 1, par diazotation habituelle des amines aromatiques de formule générale (8) 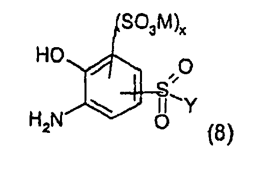
dans laquelle M, Z, Y et x présentent la signification indiquée dans la revendication 1, suivie d'un couplage sur un composant de couplage de formule générale (10) 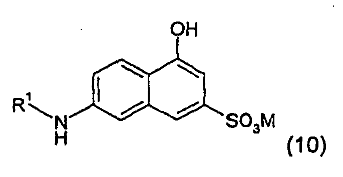
dans laquelle R¹ et M présentent la signification indiquée dans la revendication 1, ainsi que d'une condensation avec une ancre réactive de formules générales (11), (12) ou (13) 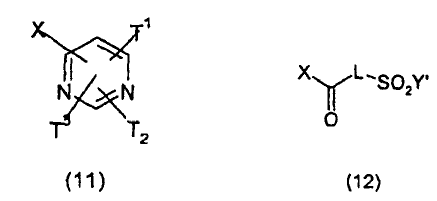 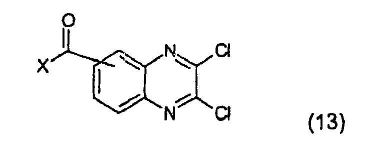
dans lesquelles T¹, T², T³, L et Y' présentent les significations indiquées dans la revendication 1 et X représente un fluore, un chlore ou un brome, et d'un cuivrage subséquent avec du pentahydrate de sulfate de cuivre.

8. Utilisation des colorants selon au moins l'une des revendications 1 à 5 pour la teinture ou l'impression d'une matière renfermant des groupes hydroxy et/ou carboxamido, de préférence d'une matière fibreuse.

9. Procédé de teinture ou d'impression d'une matière renfermant des groupes hydroxy et/ou carboxamido, de préférence d'une matière fibreuse, dans lequel un ou plusieurs colorants sont appliqués sur la matière sous forme dissoute et le ou les colorants sont fixés sur la matière par la chaleur ou à l'aide d'un agent alcalin ou au moyen des deux mesures, **caractérisé en ce que** l'on utilise au moins l'une des revendications 1 à 5 en tant que colorants.

10. Préparation de teinture comprenant un colorant selon au moins l'une des revendications 1 à 5.
